# EUROPEAN PATENT APPLICATION

(11) **EP 4 491 304 A1**
(43) Date of publication of application: **15.01.2025**
(21) Application number: 24185475.1
(22) Date of filing: 28.06.2024
(51) Int. Cl.: B22F 10/28, B22F 12/30, C23C 24/04, C23C 4/06, B22F 7/06, B22F 3/04, B33Y 10/00, B33Y 40/10, B33Y 40/20, B33Y 40/00, B29C 64/245, B23K 20/00, B22F 3/08, B22F 10/66, B22F 3/24, C22C 1/04

(54) **RESILIENT BUILD PLATES FOR POWDER BED FUSION - LASER ADDITIVE MANUFACTURING**

(30) Priority: 30.06.2023 US 202318345835
(71) Applicant: RTX Corporation, Farmington, CT 06032 (US)
(72) Inventor: BINEK, Lawrence A., East Hartford, 06118 (US); SIOPIS, Matthew, East Hartford, 06118 (US); BOYER, Jesse R., East Hartford, 06118 (US)
(74) Representative: Dehns

(57) **Abstract**

A build plate (12) for a powder bed fusion - laser (PBF-L) additive manufacturing system has a support region (50) and a top region (52). The top region (52) is formed on the support region (50) by a cold spray process, such that the top region (52) is under a compressive stress. The build plate (12) can be prepared by preparing the build plate support region (50) to receive the top region (52) and depositing, using a cold spray process, a layer of metal on the support region (50). The layer of metal is formed with a compressive stress to form the top region (52). The top region (52) is then machined to provide a desired surface roughness.

## Description

### BACKGROUND

The present disclosure relates generally to laser powder bed fusion additive manufacturing and, more particularly, to build plates for use with a laser powder bed fusion additive manufacturing system.

Powder bed fusion - laser (PBF-L) additive manufacturing is an additive manufacturing, or 3-D printing, technology that uses a laser to sinter or fuse metallic or polymeric particles together in a layer-by-layer process. PBF-L is typically used as an industrial process to make near net shape parts. Some PBF-L processes sinter the build powder particles, while others melt and fuse the build powder particles. PBF-L is also known as direct metal laser sintering (DMLS).

Build plates serve as a foundation upon which a PBF-L build is built. As the PBF-L build (i.e., the "workpiece" or "part") is built, the workpiece is effectively welded onto the build plate. For larger geometry parts, build plates can warp due to tensile stresses induced in the build plate by the workpiece. At times, the build can have sufficient internal thermal stress that it will cause a tensile failure within the build plate. Additionally, large regions of consolidate build powder on the build plate can cause build plate spallation, which can result in a failed build.

### SUMMARY

One aspect of this disclosure is directed to a build plate for a powder bed fusion - laser (PBF-L) additive manufacturing system, which has a support region and a top region. The top region is formed on the support region by a cold spray process, such that the top region is under a compressive stress.

Another aspect of the disclosure is directed to a method of preparing a build plate for use in a PBF-L additive manufacturing system. A support region of the build plate is prepared to receive a top region and a layer of metal is deposited, using a cold spray process, on the support region. The layer of metal is formed with a compressive stress to form the top region. The top region is then machined to provide a desired surface roughness.

Yet another aspect of this disclosure is directed to another method of preparing a build plate for use in a PBF-L. One or more builds formed on the build plate during a first PBF-L additive manufacturing campaign are removed from the build plate to expose a support region and defects formed in the build plate as a result of removing the one or more builds from the build plate are repaired. The support region of the build plate is prepared to receive a top region and a layer of metal is deposited, using a cold spray process, on the support region. The layer of metal is between 0.020 inches and 0.030 inches thick and is formed with a compressive stress to form the top region. The top region is then machined to provide a desired surface roughness. The build plate is installed in the PBF-L additive manufacturing system and the top region is polished by a laser in the PBF-L additive manufacturing system before build powder is deposited on top of the top region to start a second PBF-L additive manufacturing campaign.

Features of embodiments are set forth in the dependent claims.

### BRIEF DESCRIPTION OF THE DRAWINGS

Fig. 1 is a schematic of an exemplary powder bed fusion - laser (PBF-L) additive manufacturing system.
Fig 2 is photograph of a part made on a PBF-L additive manufacturing system of Fig. 1.
Fig. 3 is a schematic of a build plate that is the subject of this disclosure.

### DETAILED DESCRIPTION

Powder bed fusion - laser (PBF-L) additive manufacturing is an option to make near net shape parts. The dynamic, high temperature, high energy processes conditions that are characteristic of PBF-L additive manufacturing processes result in a PBF-L build (i.e., the "workpiece" or "part") being effectively welded onto the build plate of the PBF-L system. For larger geometry workpieces, build plates can warp due to tensile stresses induced in the build plate by the workpiece. At times, the build can have sufficient internal thermal stress that it will cause a tensile failure within the build plate. Additionally, large regions of consolidate build powder on the build plate can cause build plate spallation, which can result in a failed build.

Another challenge with PBF-L systems is that the material used for build plates must be compatible with the material used for the workpiece. Often this means that the build plates must be constructed from the same or similar material as the workpiece. For example, aluminum builds typically require aluminum build plates, titanium builds typically require titanium build plates, etc. As titanium is a relatively expensive material, titanium build plates are expensive. The expense is proportional to the size of the build plate so as PBF-L systems are scaled for industrialization, the build plates will become bigger (currently upwards of 600 mm²) further driving up cost of the process.

Further, thermal loading that occurs during a PBF-L build process induces tensile stresses in the build plates. Because the amount of consolidated mass in a build is proportional to the tensile stresses generated in the build plate, large bulky builds are often at risk of damage due to build plate warping or failure. Large bulky builds can take a very long time (e.g., as much at one month or more) and the risk of failure in the build plate increases during the build because the consolidated mass of the build increases as the build progresses towards completion. As a result, the cost of failure for such builds can increase as the build progresses towards completion.

This disclosure proposes a method of preparing build plates for use or reuse by forming a top region on top of a build plate support region using a cold spray process to induce compressive stresses that counteract the tensile stresses discussed above. As further discussed below, the process of forming the top region on top of the build plate support region can include peening the support region to induce additional compressive stresses.

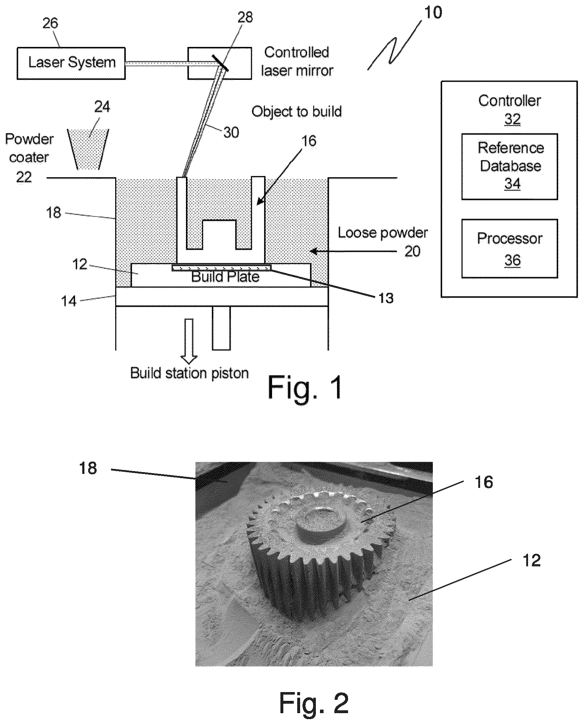

Fig. 1 is a schematic of an exemplary, non-limiting laser powder bed fusion additive manufacturing (PBF-L) system **10.** A typical PBF-L system **10** includes a build plate **12,** a build station piston **14** that adjusts the height of the build plate **12,** a workpiece or part **16** that is built on top of the build plate **12,** a powder chamber **18** to contain loose, and unconsolidated build powder **20** that surrounds the workpiece **16.** A typical PBF-L system **10** also includes a powder coater **22** that distributes additional build powder **24** over the workpiece **16** after completion of each layer formed on the workpiece **16.** A laser system **26** combined with a controlled laser mirror **28** directs a laser beam **30** onto loose build powder **20** to form a melt pool (not shown) that, when solidified, forms a layer of the workpiece **16.** As each layer of the workpiece **16** is formed, the build station piston **14** lowers the built plate **12** and workpiece **16** by a predetermined distance that corresponds to the desired thickness of the next layer of the workpiece **16.** The powder coater **22** then moves across the top of the loose build powder **20** to distribute a layer of additional build powder **24** that will then be consolidated with the laser beam **30** to form the next layer of the workpiece **16.**

Controller **32** controls the height of the build plate **12** by moving the build station piston **14,** which in turn controls the thickness of each layer of the workpiece **16.** Controller **32** also controls the movement of the powder coater **22** as it distributes additional build powder **24** and the movement of the laser beam **30** as it forms the melt pool that consolidates loose build powder **20** to form each layer of the workpiece **16.** For example, the controller **32** controls PBF-L system **10** operating parameters, including:
(1) laser beam power, laser beam velocity, and laser beam spot size, build plate temperature, and layer thickness;
(2) temperature-dependent thermophysical properties of the powder;
(3) feedstock properties including average powder particle size; and
(4) laser hatching strategy including hatch distance, hatch delay time, and stripe width.

Controller **32** typically includes a reference database **34** and processor **36.** Reference database **34** contains processing data relevant to the PBF-L system **10,** build powder to be used to produce the workpiece **16,** and the specific work piece **16** to be produced. Processor **36** contains programming to interface with the reference database **34** to control the PBF-L system **10** to products parts, such as workpiece **16,** as is known to a person of ordinary skill in the art. Workpiece **16** can be a near-net-shaped part (i.e., initial production of the part that is very close to the final (net) shape).

The PBF-L system **10** can be used with a variety of build powders to produce workpiece **24.** For example the powder can be a metal powder or polymeric powder. Metallic powders compatible with typical PBF-L systems **10** include aluminum, aluminum alloys (e.g., aluminum-lithium alloys), titanium, nickel, nickel alloys, and other metals and alloys known in the art. Polymeric powders compatible with typical PBF-L systems **10** include a wide variety of polymers as known in the art.

As discussed above, thermal loading that occurs during a PBF-L build process induces regions of tensile stress **13** in the build plate **12.** The extent of the region of tensile stress **13** can be proportional to the consolidated mass of the workpiece **16,** which increases as a build campaign progresses by depositing and consolidating more build powder. The formation of regions of tensile stress **13** in the build plate **12** can lead to build plate warping or failure.

Fig. 2 is a photograph of a part or workpiece **16** made on PBF-L system **10.** Fig. 2 also shows powder chamber **18** that contains loose and unconsolidated build powder **20** remaining after the build operation used to make workpiece **16.** Once the PBF-L additive manufacturing campaign is complete, the workpiece **16** must be removed from the build plate **12** using appropriate techniques such sawing, wire electrical discharge machining (W-EDM), or other mechanical removal methods. Removing the workpiece **16** from the build plate **12** typically creates defects, such as cracks, fissures, or even holes, that damage the build plate **12.** As a result, the build plate **12** must typically be repaired or resurface as discussed below before reuse.

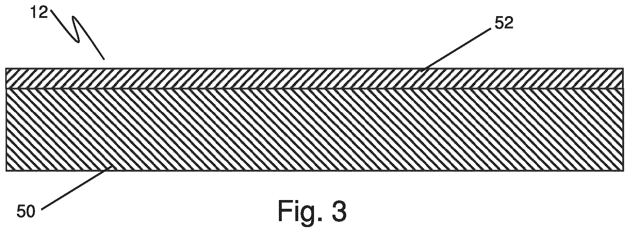

Fig. 3 is a schematic of a build plate **12** that includes a support region **50** and a top region **52.** The support region **50** provides structural support for the build plate **12** and is configured to sit on or be attached to the build station piston **14** of PBF-L system **10.** Support region **50** is a metallic structure can be formed from any metallic composition suitable for use in the PBF-L system **10.** For example, support region **50** may be formed from aluminum, copper, iron, nickel, titanium, and alloys of those metals, including various steels. The support region **50** can be instrumented (not shown) and/or can include cooling features (not shown), such as cooling channels. Top region **52** is a metallic layer deposited on support region **50** using a cold spray method to induce compressive stresses as discussed in more detail below. Top region **52** is formed from a metal that is compatible with the build powder composition used to make a particular workpiece **16** in the PBF-L system **10.** For example, if the workpiece **16** is to be made from aluminum, the top region **52** may be aluminum; if the workpiece **16** is to be made from titanium, the top region **52** may be titanium, such as commercially pure titanium. Similarly, if the workpiece **16** is to be made from Inconel, the top region **52** may be a compatible steel. As long as the top region **52** is made from a metal that is compatible with the build powder composition used to make a particular build, the support region **50** may be made from any appropriate material. For example, the top region **52** may be commercially pure titanium deposited onto a steel support region **50.**

Before the top region **52** is deposited on top of the support region **50,** the support region **50** can be subject to a surface preparation operation, followed by peening to induce compressive stresses. The surface preparation and peening operations can be any such operations typically used to prepare a surface to receive a coating. For example, the surface preparation can include one or more of solvent cleaning, grit blasting, grinding, machining, or any other suitable surface preparation step. Grit blasting, grinding, and/or machining or any other surface preparation step can be used to establish a suitable surface roughness to facilitate adhesion of the top region **52.** The peening operation can be laser shock peening, shot peening, or any other suitable, similar process.

As discussed, the top region **52** is deposited on top of the support region **50** using a cold spray process. Cold spray is a coating deposition method in which solid powders (e.g., powders with average diameters of 5 µm to 50 µm) are accelerated in a supersonic gas jet (e.g., at velocities up to about 1200 m/s) to impact a substrate, in this case the support region **50.** During impact with the substrate, the solid powder particles undergo plastic deformation and adhere to the substrate's surface without melting. The kinetic energy of the particles, supplied by the expansion of the gas, is converted to plastic deformation energy during bonding. When spraying metal powders, particularly those disclosed in this disclosure, the working gas for the cold spray process is nitrogen or helium often at pressures above 1.5 MPa, a flow rate of more than 2 m³/min, and heating power of 18 kW. For example, helium may be used as the working gas to deposit commercially pure titanium to form a top region **52** on a steel support region **50** using a cold spray process. A number of factors, including the following, can affect the quality of cold spray coatings:
- Gas type (e.g., nitrogen, helium), pressure and temperature
- Material properties of the powder to be deposited, e.g., particle size, density, strength, melting temperature
- Material properties of the substrate onto which the powder is deposited
- Nozzle type, e.g., converging/diverging nozzle or another nozzle configuration
- Deposition kinetics (e.g., nozzle standoff distance, nozzle transverse speed, number of passes, etc.)

The use of a cold spray process to apply the top region **52** on the support region **50** induces a compressive stress in the top region **52.** The compressive stress imparted by the cold spray process will allow greater tensile stresses to occur in the build plate **12** during a PBF-L additive manufacturing campaign without a tensile failure (internal plate spalling). The level of compressive stress imparted by the cold spray process depends on the factors discussed above.

The top region **52** can be deposited as a layer of any desirable thickness on the support region **50.** For example, the top region **52** can be between 0.020 inches (0.51 mm) and 0.030 inches (0.76 mm) thick. Depending on the application, the top region **52** can be applied over the entire support region **50** such that the top region **52** and support region **50** have the same surface area. In other applications, the top region **52** can be applied over less than the entire support region **50** such that the top region **52** has a smaller surface area than the support region **50.** Creating a top region **52** having a smaller surface area than the support region **50** can be desirable as a cost-saving measure (i.e., a smaller top region **52** requires less material) or as a way to reuse less than all of the surface area of the support region **50** when refurbishing a build plate **12** that has previously been used in a PBF-L additive manufacturing campaign.

Following deposition of the top region **52** on the support region **50,** the top region **52** can be ground or machined flat to achieve a desirable surface for a PBF-L additive manufacturing campaign. In some applications, the top region **52** can be further finished by polishing it with a laser in the PBF-L additive manufacturing system before starting a PBF-L additive manufacturing campaign. If performed, the polishing step can be accomplished by selecting suitable laser parameters, such as laser beam power, laser beam velocity, and laser beam spot size.

The build plate **12** of the present disclosure can either be a new, unused built plate or a build plate previously used in a PBF-L additive manufacturing campaign (e.g., a first PBF-L additive manufacturing campaign). If the build plate **12** was previously used in a PBF-L additive manufacturing campaign, it likely needs some amount of repair due to defects that form as a result of removing builds or workpieces from the PBF-L additive manufacturing campaign. The defects can be cracks, fissures, or even holes that form from the mechanical methods used to remove builds or workpieces. The repairs can be any methods typically used to repair such defects in a structure such as build plate **12.** For examples, the defects can be filled with filler material, ground out, or repaired with any combination of suitable techniques. Following repair to the build plate **12,** the build plate **12** can serve as the support region **50** upon which the top region **52** is deposited as discussed above. Once complete, the build plate **12** can be installed in the PBF-L additive manufacturing system **10** before build powder is deposited on top of the top region **52** to start another PBF-L additive manufacturing campaign (e.g., a second PBF-L additive manufacturing campaign).

The build plate and method for preparing the build plate for use in a PBF-L additive manufacturing system addresses the tensile stresses induced during a PBF-L additive manufacturing campaign by introducing countervailing compressive stresses into the build plate. This allows the build plate to sustain forces from the tensile stresses without exhibiting damage (e.g., spallation and delamination) that often occurs during PBF-L additive manufacturing campaigns. In addition, the use of top region on top of a build plate support region facilitates the reuse of build plates following a PBF-L additive manufacturing campaign. Further, this feature can reduce the cost of PBF-L additive manufacturing campaigns by allowing the top region to be metallurgically matched to the composition of the build or workpiece to be made during a PBF-L additive manufacturing campaign while using a less expensive material for the build plate support region.

### Discussion of Possible Embodiments

The following are non-exclusive descriptions of possible embodiments of the present invention.

A build plate for a PBF-L additive manufacturing system, comprising a build plate having a support region and a top region, wherein the top region is formed on the support region by a cold spray process such that the top region is under a compressive stress.

The build plate of the preceding paragraph can optionally include, additionally and/or alternatively, any one or more of the following features, configurations and/or additional elements:
A further embodiment of the foregoing build plate, wherein the support region and top region are formed from the same material.

A further embodiment of any of the foregoing build plates, wherein the support region and top region are formed from different materials.

A further embodiment of any of the foregoing build plates, wherein the support region is formed from steel and the top region is formed from commercially pure titanium.

A further embodiment of any of the foregoing build plates, wherein the top region is between 0.020 inches and.030 inches thick.

A further embodiment of any of the foregoing build plates, wherein the top region has a surface area that is the same as a surface area of the support region.

A further embodiment of any of the foregoing build plates, wherein the top region has a surface area that is smaller than a surface area of the support region.

A method of preparing a build plate for use in a PBF-L additive manufacturing system, comprising preparing a support region of the build plate to receive a top region; depositing, using a cold spray process, a layer of metal on the support region, wherein the layer of metal forms the top region and the layer of metal is formed with a compressive stress; and machining to (or the) top region to provide a desired surface roughness.

The method of preparing a build plate of the preceding paragraph can optionally include, additionally and/or alternatively, any one or more of the following features, configurations and/or additional elements:
A further embodiment of the foregoing method of preparing a build plate, wherein the support region and top region are formed from the same material.

A further embodiment of any of the foregoing methods of preparing a build plate, wherein the support region and top region are formed from different materials.

A further embodiment of any of the foregoing methods of preparing a build plate, wherein the support region is formed from steel and the top region is formed from commercially pure titanium.

A further embodiment of any of the foregoing methods of preparing a build plate, wherein the top region is between 0.020 inches and.030 inches thick.

A further embodiment of any of the foregoing methods of preparing a build plate, wherein the top region has a surface area that is the same as a surface area of the support region.

A further embodiment of any of the foregoing methods of preparing a build plate, wherein the top region has a surface area that is smaller than a surface area of the support region.

A further embodiment of any of the foregoing methods of preparing a build plate, wherein the build plate is installed in the PBF-L additive manufacturing system and the top region is polished by a laser in the PBF-L additive manufacturing system before build powder is deposited on top of the top region.

A further embodiment of any of the foregoing methods of preparing a build plate, wherein preparing a support region of the build plate to receive a top region comprises removing from the build plate one or more builds formed on the build plate during a first PBF-L additive manufacturing campaign to expose the support region; and repairing any defects formed in the build plate as a result of removing the one or more builds from the build plate.

A method of preparing a build plate for use in a PBF-L additive manufacturing system, comprising removing from the build plate one or more builds formed on the build plate during a first PBF-L additive manufacturing campaign to expose a support region; repairing any defects formed in the build plate as a result of removing the one or more builds from the build plate; preparing the support region of the build plate to receive a top region; depositing, using a cold spray process, a layer of metal on the support region, wherein the layer of metal forms the top region such that the top region is between 0.020 inches (0.51 mm) and 0.030 inches (0.76 mm) thick and the top region is formed with a compressive stress; machining to (or the) top region to provide a desired surface roughness; installing the build plate the PBF-L additive manufacturing system; and polishing the top region by a laser in the PBF-L additive manufacturing system before build powder is deposited on top of the top region to start a second PBF-L additive manufacturing campaign.

The method of preparing a build plate of the preceding paragraph can optionally include, additionally and/or alternatively, any one or more of the following features, configurations and/or additional elements:
A further embodiment of the foregoing method of preparing a build plate, wherein the support region and top region are formed from the same material.

A further embodiment of any of the foregoing method of preparing a build plate, wherein the support region and top region are formed from different materials.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A build plate (12) for a powder bed fusion - laser (PBF-L) additive manufacturing system (10), comprising:
a build plate (12) having a support region (50) and a top region (52), wherein the top region (52) is formed on the support region (50) by a cold spray process such that the top region (52) is under a compressive stress.

2. A method of preparing a build plate (12) for use in a powder bed fusion - laser (PBF-L) additive manufacturing system (10), comprising:
preparing a support region (50) of the build plate (12) to receive a top region (52);
depositing, using a cold spray process, a layer of metal on the support region (50), wherein the layer of metal forms the top region (52) and the layer of metal is formed with a compressive stress; and
machining the top region (52) to provide a desired surface roughness.

3. The build plate of claim 1 or method of claim 2, wherein the top region (52) is between 0.020 inches (0.51 mm) and 0.030 inches (0.76 mm) thick.

4. The build plate or method of any preceding claim, wherein the top region (52) has a surface area that is the same as a surface area of the support region (50).

5. The build plate or method of any of claims 1 to 3, wherein the top region (52) has a surface area that is smaller than a surface area of the support region (50).

6. The method of any of claims 2 to 5, wherein the build plate (12) is installed in the PBF-L additive manufacturing system (10) and the top region (52) is polished by a laser (30) in the PBF-L additive manufacturing system (10) before build powder (20) is deposited on top of the top region (52).

7. The method of any of claims 2 to 6, wherein preparing a support region (50) of the build plate (12) to receive a top region (52) comprises:
removing from the build plate (12) one or more builds (16) formed on the build plate (12) during a first PBF-L additive manufacturing campaign to expose the support region (50); and
repairing any defects formed in the build plate (12) as a result of removing the one or more builds (16) from the build plate (50).

8. A method of preparing a build plate (12) for use in a powder bed fusion - laser (PBF-L) additive manufacturing system (10), comprising:
removing from the build plate (12) one or more builds (16) formed on the build plate (12) during a first PBF-L additive manufacturing campaign to expose a support region (50);
repairing any defects formed in the build plate (12) as a result of removing the one or more builds (16) from the build plate (12);
preparing the support region (50) of the build plate (12) to receive a top region (52);
depositing, using a cold spray process, a layer of metal on the support region (50), wherein the layer of metal forms the top region (52) such that the top region (52) is between 0.020 inches (0.51 mm) and 0.030 inches (0.76 mm) thick and the top region (52) is formed with a compressive stress;
machining the top region (52) to provide a desired surface roughness;
installing the build plate (12) the PBF-L additive manufacturing system (10); and
polishing the top region (52) by a laser (30) in the PBF-L additive manufacturing system (10) before build powder (20) is deposited on top of the top region (52) to start a second PBF-L additive manufacturing campaign.

9. The build plate or method of any preceding claim, wherein the support region (50) and top region (52) are formed from the same material.

10. The build plate or method of any of claims 1 to 8, wherein the support region (50) and top region (52) are formed from different materials.

11. The build plate or method of claim 10, wherein the support region (50) is formed from steel and the top region (52) is formed from commercially pure titanium.
